# EUROPÄISCHE PATENTSCHRIFT

(11) **EP 0 755 849 B1**
(45) Veröffentlichungstag und Bekanntmachung des Hinweises auf die Patenterteilung: **12.05.1999**
(21) Anmeldenummer: 96109285.5
(22) Anmeldetag: 11.06.1996
(51) Int. Cl.: B62D 33/06

(54) **Armaturenbrett in einem Frontlenker-Lastkraftwagen oder -Omnibus mit integriertem Sicherheitsträger**
Dashboard for cab-over-engine lorries or busses with integrated safety support
Tableau de bord pour camions ou autobus à cabine avancée incorporant un support de sécurité

(30) Priorität: 28.07.1995 DE 19527627
(43) Veröffentlichungstag der Anmeldung: 29.01.1997
(73) Patentinhaber: MAN Nutzfahrzeuge Aktiengesellschaft, 80976 München (DE)
(72) Erfinder: Geyer, Wolfgang, 80798 München (DE)

(56) Entgegenhaltungen:
- DE-A- 3 624 747
- FR-A- 2 136 655
- FR-A- 2 507 549
- US-A- 4 358 152

## Beschreibung

Die Erfindung betrifft ein Armaturenbrett in einem Frontlenker-Lastkraftwagen oder -Omnibus mit Merkmalen der im Oberbegriff des Anspruches 1 angegebenen Art.

Die Erfindung geht aus von einem Stand der Technik, wie aus der DE 36 17 961 C2 und US-PS 3, 055, 699 bekannt. Dabei geht aus der DE 36 17 961 C2, dort Fig. 15, 20, 21 und zugehörigem Text folgendes hervor: Die Frontwand des Fahrerhauses ist dort im Bereich des Armaturenbrettes durch ein zusätzliches Organ formversteift. Bei diesem aus Fig. 15 ersichtlichen Formversteifungsorgan handelt es sich um ein beide Seitenwände im Bereich der A-Säulen verbindendes formstabiles Querrohr. Dieses übernimmt sowohl Festigkeitsfunktionen in Quer- und Längsrichtung als auch die Funktion eines Trägers für alle Armaturenbrett-Teile sowie Lenkungs-und Klimatisierungsteile. Zu diesem Zweck sind an dem Querrohr verschiedene, aus Fig. 15 im einzelnen ersichtliche Aufnahme- und Befestigungsteile vorhanden, an denen die Anbauteile fixierbar / befestigbar sind. Mit diesem Querrohr ist bei entsprechend steifer Ausbildung zwar die Querstabilität des Fahrerhauses nennenswert erhöhbar, nicht jedoch dessen Längsstabilität. Dies deshalb, weil das Querrohr relativ weit beabstandet von der Frontwand verlaufend in das Armaturenbrett integriert ist und somit nur zusammen mit diesem einem Frontalaufprall entgegenwirken kann. Letzteres bedeutet, je stärker der Aufprall, desto stärker die Verformung der Frontwand, desto weiter wird das Armaturenbrett ins Fahrerhaus-Innere hineingeschoben und gefährdet dort umsomehr Fahrer und Beifahrer.

Einen anderen Weg, nämlich jenen, eine größtmögliche Formstabilität der Frontwand auch bei stärksten Frontalaufprallkräften zu gewährleisten, beschreitet die Lösung der US-PS 3, 055, 699. Dort wird das Fahrerhaus frontwandseitig durch einen sehr massiven Querträger versteift. Dieser ist mit seinen beiden Enden mit den A-Säulen der Türrahmen und vorn mit der Frontwand, ein Teil dieser bildend, verbunden. Dieser Querträger hat ein abgewinkeltes Profil und setzt sich aus einer massiven Quer- und Vertikalplatte zusammen. Dieser winkelprofilige Querträger bildet außerdem das Tragelement für die Windschutzscheibe und das Armaturenbrett des Frontlenker-Lastkraftwagen. Nach unten ist dieser Querträger über großflächige, am Motortunnel befestigte Stützwangen gegenüber dem Fahrerhausboden abgestützt. Aufgrund dieses massiven Querträgers ist das Fahrerhaus frontseitig sowohl in Quer- als auch Längsrichtung so stark armiert, daß bei einem Crash frontseitig keine nennenswerte Verformung des Fahrerhauses auftritt. Da somit von diesem massiven Querträger praktisch wegen kaum möglicher Verformbarkeit keine Aufprallenergie aufgenommen und verzehrt werden kann, wirkt sich die Aufprallenergie im Fahrerhaus in nachteiliger Weise aus, indem die Insassen sehr starken Beschleunigungen ausgesetzt werden. Letzteres bedeutet hohes Verletzungsrisiko, das - wenn überhaupt - nur mit vergleichsweise teuren Rückhaltemitteln (Sicherheitsgurte, Fahrer- und Beifahrer-Airbag) abgemildert werden kann.

Es ist aus Sicht der beiden vorstehend diskutierten bekannten Lösungen daher Aufgabe der Erfindung, ein Armaturenbrett mit einem integrierten Sicherheitsträger solcher Art und Anordnung zu schaffen, daß dieser einerseits eine hohe Quersteifigkeit aufweist, andrerseits aber auch in der Lage ist, bei einem Frontalcrash Aufprallenergie verzehren zu können.

Diese Aufgabe ist bei einem Armaturenbrett der gattungsgemäßen Art erfindungsgemäß durch Merkmale der im Kennzeichen des Anspruches 1 angegebenen Art gelöst.

Vorteilhafte Ausgestaltungen und Weiterbildungen dieser Lösung sind in den Unteransprüchen gekennzeichnet.

Der erfindungsgemäße Träger ermöglicht es zunächst, daß alle Armaturenbretteile, die in der Regel als Module vorgefertigt sind, schnell und einfach zu einer Armaturenbretteinheit vormontierbar sind. Aufgrund der leiterrahmen - bzw. fachwerkrahmenartigen Ausgestaltung und damit räumlich in Richtung Fahrzeuginnenraum ausgedehnten Erstreckung des Trägers ist dabei eine einwandfreie Abstützung der einzelnen, zum Teil auch relativ schweren Armaturenbrett-Teile, wie z.B. der mittlere Klimaanlagen-Modul, am Träger und über diesen im Fahrzeug auch bei Befahrung von schlechten Fahrstrecken sichergestellt. Der Träger und die Armaturenbrett-Teile bilden somit eine außerhalb des Fahrzeuges, gegebenenfalls bei einem Systemunterlieferanten komplett vormontierte Armaturenbretteinheit, die bei Endmontage des Fahrzeuges in dieses eingebaut wird.

Nach Einbau dieser Armaturenbrett-Einheit übernimmt der erfindungsgemäße Träger im Fahrzeug für dessen Vorderbereich auch eine spezielle Armierungsfunktion. Dabei bewirkt der innerhalb des den Träger bildenden Leiter- bzw. Fachwerkrahmens gegebene, die beiden A-Säulen verbindende hintere Querträger hauptsächlich eine Frontstabilisierung in Quer- und Längsrichtung und ist hierfür entsprechend stabil und weitgehend biegesteif ausgebildet. Die erfindungsgemäße Knautschzone bzw. Verformungszone, welche bei einem Frontalcrash wirksam wird, ist innerhalb des Trägers räumlich vor dem hinteren Querträger gegeben, wobei dieses Knautschen bzw. Verformen des Trägers praktisch ausschließlich durch entsprechende längsweiche bzw. längsnachgiebige" Auslegung bzw. Einstellung der den vorderen und hinteren Querträger verbindenden Streben zugelassen wird. Diese Längsweichheit bzw. Längsnachgiebigkeit des vorderen Träger-Bereiches ist dabei durch gezielte Anordnung, Materialwahl, Formgebung, Querschnitt und Bemessung der Streben definiert auf die bei einem möglichen Frontalcrash des Fahrzeuges auftretenden Kräfte einstellbar, insbesondere in dem Sinne, daß eine Verformung der Frontwand in Richtung Fahrzeuginneres nur um ein bestimmtes Maß zugelassen wird und dabei durch die Verformungsarbeit innerhalb des leiter- bzw. fachwerkartigen Trägers die Aufprallenergie möglichst vollständig aufzehrbar ist. Im Ergebnis soll dabei auch das Armaturenbrett mit seinen Teilen am Träger gehalten bleiben und - wenn überhauptnur um ein geringes Maß in den Fahrzeuginnenraum verschoben werden, um Fahrer und Beifahrer auch bei starken Frontalunfällen eine echte Überlebenschance zu bieten.

Nachstehend ist die erfindungsgemäße Lösung anhand mehrerer in der Zeichnung dargestellter Ausführungsbeispiele noch näher erläutert. In der Zeichnung zeigen:
- Fig. 1: schematisch und ausschnittsweise in Perspektivansicht von schräg vorn ein Fahrerhaus eines Frontlenker-Lkw mit eingebautem Armaturenbrett gemäß der Erfindung,
- Fig. 2: schematisch eine Draufsicht auf die Armaturenbrett-Version gemäß Fig. 1,
- Fig. 3: einen Schnitt durch die Armaturenbrett-Version gemäß Fig. 1 entlang Schnittlinie III - III in Fig. 2,
- Fig. 4: einen Schnitt durch die Armaturenbrett-Version gemäß Fig. 1 entlang Schnittlinie IV- IV in Fig. 3,
- Fig. 5: schematisch eine Draufsicht auf eine zweite Armaturenbrett-Version,
- Fig. 6: schematisch eine Draufsicht auf eine dritte Armaturenbrett-Version,
- Fig. 7: einen Schnitt durch die dritte Armaturenbrett-Version gemäß Fig. 6 entlang der dort eingetragenen Schnittlinie VII - VII, und
- Fig. 8: einen Schnitt durch die dritte Armaturenbrett-Version gemäß Fig. 6 entlang der Schnittlinie VIII - VIII in Fig. 7.

In den einzelnen Figuren sind der Übersichtlichkeit wegen gleiche bzw. einander entsprechende Teile mit gleichen Bezugszeichen angezogen.

In der Zeichnung bezeichnen 1 insgesamt das Fahrerhaus eines Frontlenker-Lastkraftwagen, 2 und 3 dessen beide Seitenwände, 4 dessen Frontwand und 5 dessen Boden mit integriertem Motortunnel 6. In der Frontwand 4 ist deren Brüstungslinie mit 7 und die darüber eingebaute Windschutzscheibe mit 8 bezeichnet. Die im jeweiligen Eckbereich am Übergang von der Frontwand 4 zu einer Seitenwand 2 bzw. 3 gegebene A-Säule ist mit 9 bzw. 10 bezeichnet. Die Frontwand 4 ist aus zwei vorgefertigten Blechpreßteilen 4/1, 4/2 zusammengesetzt und im Bereich der Brüstungslinie 7 versteift. Dies durch gezielte Formgebungsmaßnahmen, dergestalt, daß dort ein in sich selbst noch versteiftes, beide A-Säulen 9, 10 verbindendes Hohlprofil 11 durch einen vorgezogenen Bereich 11/1 am Außenblech 4/1 und einen nach innen gezogenen Bereich 11/2 am Innenblech 4/2 mit integrierter Versteifungsnut 11/3 gegeben ist. Zusätzlich versteift ist dieses Hohlprofil 11 durch eine innenseitig am vorgezogenen Bereich 11/1 abgestützt befestigte, z. B. durch ein Blechpreßteil gebildete Armierungsschiene 12.

Das innenseitig an der Frontwand 4 angeordnete, insgesamt mit 13 bezeichnete Armaturenbrett setzt sich vorzugsweise aus mehreren, insbesondere drei vorgefertigten Modulen zusammen, nämlich einem mittleren Modul 13/1, der wenigstens die gesamte Lüftungs-, Heizungs- und Klimaeinrichtung aufnimmt, einem linken Modul 13/2, der wenigstens die gesamte Instrumentierung, einen Schalterblock und gegebenenfalls auch Lenkungsteile aufnimmt, und einem rechten Modul 13/3, der zumindest Teile der Bordelektrik-/Elektronik/Sicherungen sowie Handschuhkasten aufnimmt. Die Module 13/2 und 13/3 sind vorzugsweise gegeneinander austauschbar, je nachdem, ob das Fahrzeug rechts oder links gelenkt ist.

Angebaut an und getragen werden diese Armaturenbrett-Module 13/1, 13/2, 13/3 von einem Träger erfindungsgemäßer Art, der in der Zeichnung insgesamt mit 14 bezeichnet ist. Dieser Träger 14 ist in sich nach Art eines Leiter- oder Fachwerkrahmens ausgebildet und besteht aus einem formstabilen, die beiden A-Säulen 9, 10 verbindenden hinteren Querträger 14/1 und einem an der Frontwand 4 innenseitig fixierten vorderen Querträger 14/2 sowie mehreren, die beiden relativ weit voneinander beabstandeten Querträger 14/1, 14/2 verbindenden Streben 14/3. Letztere sind innerhalb des Trägers 14 einerseits so verteilt angeordnet, daß sie den Anbau der Armaturenbrett-Module 13/1, 13/2, 13/3 samt deren modulinterner Gerätschaften nicht behindern. Andrerseits sind die Streben 14/3 hinsichtlich Formgebung, Material, Querschnitt, Bemessung, Anordnung so festgelegt, daß innerhalb des Trägers 14 eine bei einem Frontal-Crash des Fahrzeuges definiert wirksame Verformungs- bzw. Knautschzone gegeben ist. Dabei ist der hintere Querträger 14/1 durch entsprechende Materialwahl, Formgebung, Bemessung so stabil ausgebildet, daß er sich im Crashfalle nicht oder nicht nennenswert verformt, die Knautschzone also vor ihm gegeben ist und die energieverzehrende Verformung im Bereich der Streben 14/3 und des vorderen Querträgers 14/2 abläuft.

In bevorzugter Ausgestaltung erstrecken sich alle Teile 14/1, 14/2, 14/3 des Trägers 14, wenn mit dem Armaturenbrett 13 ins Fahrzeug eingebaut, in einer parallel zur Fahrbahn verlaufenden Ebene. Außerdem ist der Träger 14 hinsichtlich Ausbildung und Anordnung seiner Teile 14/1, 14/2 und 14/3 vorzugsweise zur Längsmittelhochebene des Fahrzeuges symmetrisch ausgebildet.

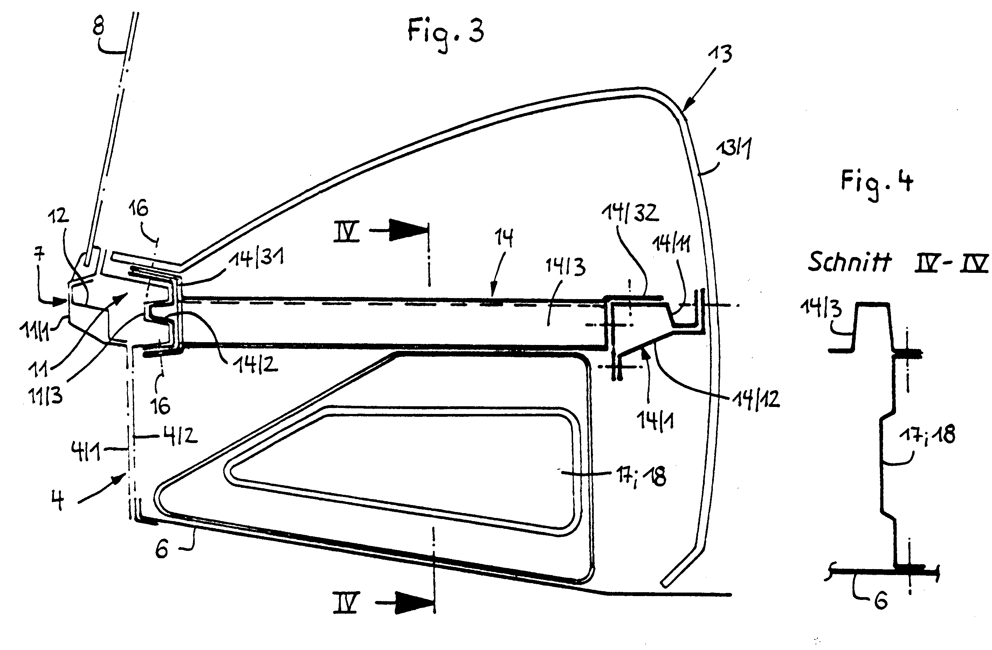

Der innerhalb des Trägers 14 hintere Querträger 14/1 ist vorzugsweise als Hohlprofil realisiert, das - wie aus Fig. 3 ersichtlich - aus zwei einander ergänzenden und miteinander verschraubten oder verschweißten Blechpreßteilen 14/11, 14/12 zusammengesetzt ist, aber auch anders, z.B. wie aus Fig. 7 ersichtlich durch ein Rohr mit vorzugsweise rechteckigem oder quadratischem Querschnitt realisiert sein kann.

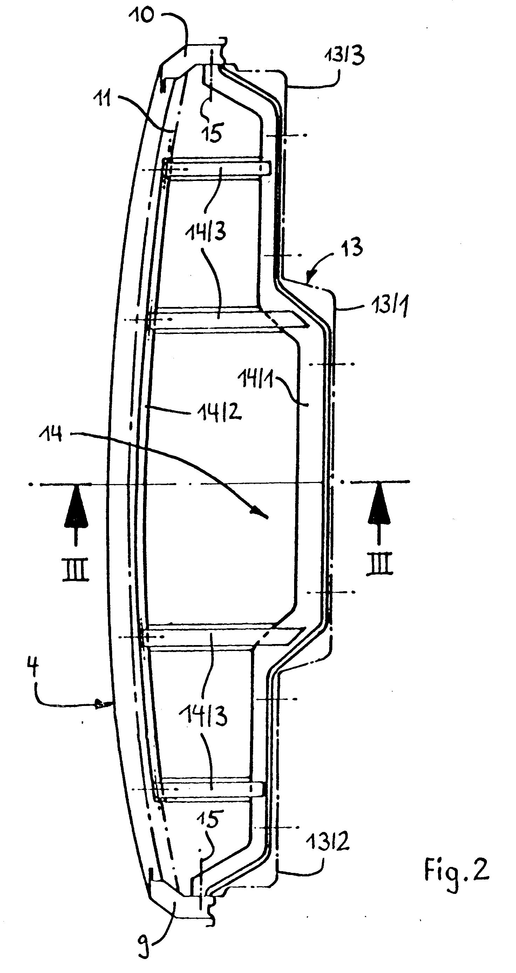

Dabei ist der hintere Querträger 14/1 in der Einbauebene mehrfach abgestuft, d.h., bezogen auf die Frontwand 4 abschnittsweise unterschiedlich weit in Richtung Fahrzeug-bzw. Fahrerhausinnenraum hineinragend ausgebildet. Wie die Fig. 2, 5, 6 zeigen, ist der Mittelabschnitt hierbei am weitesten einwärts gezogen, weil in diesem Bereich sehr viel Ein- bzw. Anbauraum für den mittleren Armaturenbrett-Modul 13/1 mit der Klimaanlage benötigt wird.

An seinen äußeren Enden besitzt der hintere Querträger 14/1 Anschlußorgane, wie Flansche oder Platten, über die er an den A-Säulen 9, 10 mittels Schrauben 15 (nur gestrichelt angedeutet) lösbar befestigbar ist.

Der innerhalb des erfindungsgemäßen Trägers 14 vordere Querträger 14/2 erstreckt sich zwischen den A-Säulen 9, 10 nicht ganz bis zu diesen hin, sondern nur über ca. 60 - 80% der Frontwandbreite, wobei der Abstand des jeweiligen Querträger-Endes zur benachbarten A-Säule 9 bzw. 10 vorzugsweise jeweils gleich ist. Außerdem folgt der vordere Querträger 14/2 der Kontur des die Frontwand 4 im Bereich der Brüstungslinie 7 armierenden Versteifungshohlprofiles 11 und ist vorzugsweise durch ein Blechpreßteil mit z. B. W-förmigem Querschnitt gebildet. Aufgrund dieser Formgebung zentriert sich der Träger 14 mit seinem vorderen Querträger 14/2 bei Einbau des Armaturenbrettes 13 selbst am frontwandseitigen Versteifungshohlprofil 11 und ist nach seiner dortigen Befestigung mittels Schrauben 16 (nur gestrichelt angedeutet) am Hohlprofil 11, mit dessen Außenkontur verzahnt, formschlüssig fixiert.

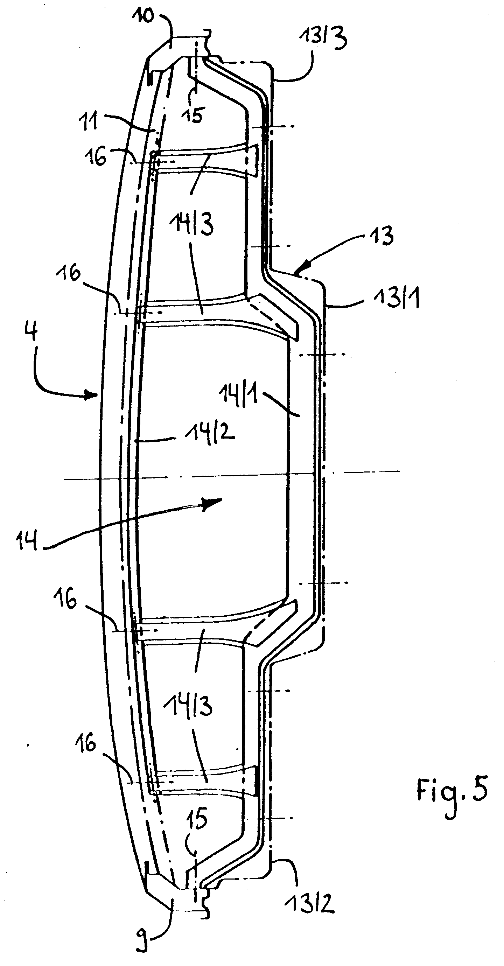

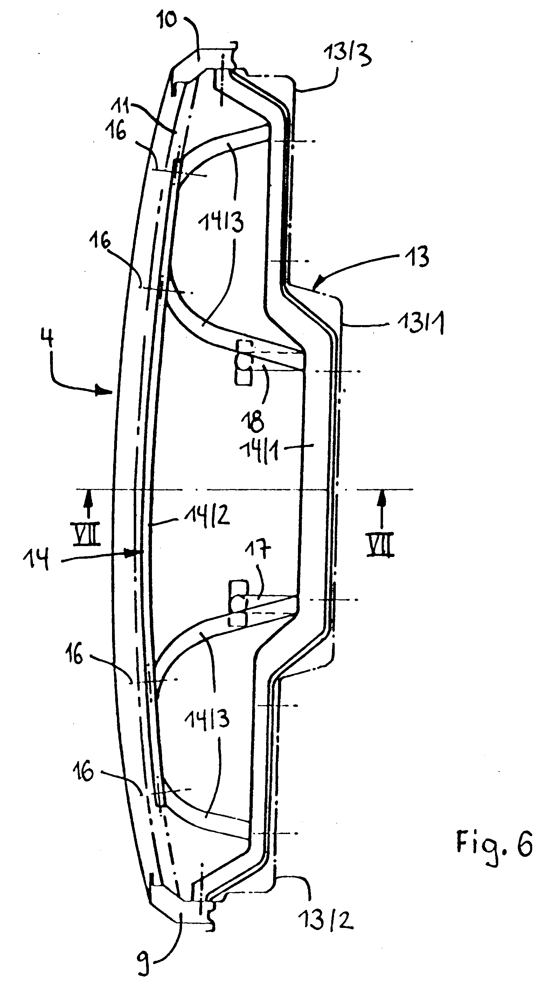

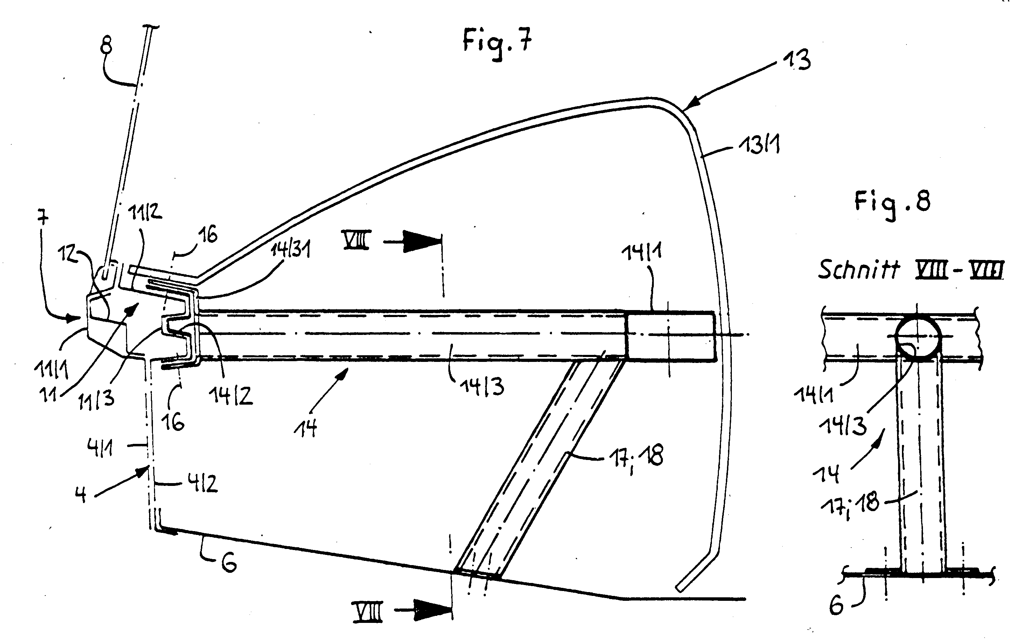

Die innerhalb des erfindungsgemäßen Trägers 14 den vorderen und hinteren Querträger 14/2 und 14/1 verbindenden sprossenartigen Streben 14/3 können sich als im wesentlichen geradlinige, stabförmige Organe parallel zur Fahrzeug-Längsachse - siehe Fig. 2 und 5 - erstrecken. Alternativ hierzu können die Streben 14/3 jedoch auch in sich in Längserstreckungsrichtung gekrümmt und/oder schräg (fachwerkbildend) zur Fahrtrichtung angeordnet sein - siehe Fig. 6. Die Anordnung der Streben 14/3 muß jedoch auch im Hinblick auf den Anbau der Armaturenbrett-Module 13/1, 13/2, 13/3 mit deren Baugruppen, die die Ebene des Trägers 14 überoder untergreifen, getroffen bzw. festgelegt werden. Die Streben 14/3 selbst können durch von Profil-Halbzeugen abgelängte Stäbe - siehe Fig. 3 und 4 - oder durch Blechpreßteile mit in Längserstreckung unterschiedlichem Querschnitt - siehe Fig. 5 - oder durch Rohre mit z.B. runden, rechteckigem oder quadratischem Querschnitt - siehe Fig. 7, 8 - gebildet sein. Hinsichtlich Material, Bemessung, Wand-bzw. Blechdichte und Form sind die Streben 14/3, wie bereits weiter vorn erwähnt, auch auf die Darstellung einer Knautschzone und eine Energieverzehrung durch Verformungsarbeit in einen Crashfall ausgebildet bzw. eingestellt. Jede der Streben 14/3 ist vorn selbst so ausgebildet oder mit einem angeschweißten, U-förmigen Anschlußbügel 14/31 versehen, daß sie formschlüssig am vorderen Querträger 14/2, diesen außen maulartig übergreifend, fixierbar und befestigbar ist. Andernendes kann jede der Streben 14/3 selbst so ausgebildet oder mit einem einfachen, angeschweißten Anschlußwinkel 14/32 versehen sein, daß sie formschlüssig am hinteren Querträger 14/1 fixierbar und befestigbar ist. Im Fall des Beispiels gemäß Fig. 7, 8 sind die rohrförmigen Streben 14/3 hinten stumpf am hinteren Querträger 14/1 vorderseitig anschließend abgestützt und angeschweißt.

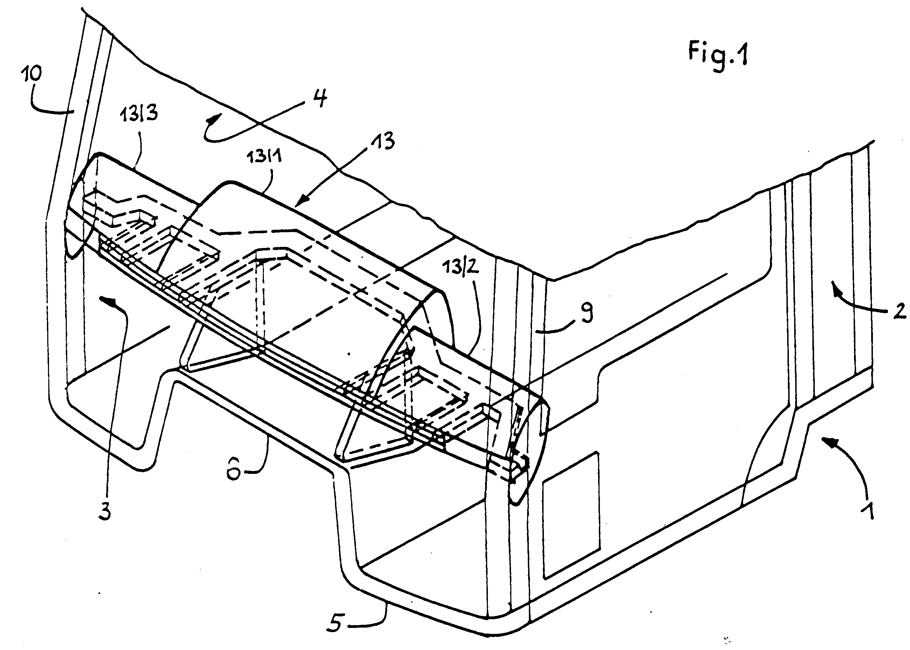

In Einbaulage ist das Armaturenbrett 13 von unten her über zwei Stützen 17, 18 - siehe Fig. 1, 3, 4, 6, 7, 8 - gegenüber dem Fahrzeug- bzw. Fahrerhausboden 5 respektive dem Motortunnel 6 abgestützt. Die beiden Stützen 17, 18 sind vorzugsweise jeweils unterhalb der Trennlinie zwischen mittlerem 13/1 und äußerem Armaturenbrett-Modul 13/2 bzw. 13/3 angeordnet. Dabei besteht die Möglichkeit, die Stützen 17, 18 als vorgefertigte Teile getrennt vom Armaturenbrett 13 im Fahrzeug einzubauen und bei Einbau des Armaturenbrettes 13 dieses über den integrierten Träger 14 dann an den Stützen 17, 18 mittels Schrauben zu befestigen. Die andere Alternative ist, die Stützen 17, 18 an der Armaturenbrett-Einheit vorzusehen und dort mit deren Träger 14 fest zu verbinden (Verschraubung oder Verschweißung). Diese Version ist in der Zeichnung dargestellt. Dabei können die Stützen 17, 18 - wie Fig. 3, 4 zeigen - durch tafelartige Blechpreßteile als Stützwangen ausgebildet sein, die zum jeweiligen Fußraum hin auch mit Polsterungen oder Blenden verkleidet sein können. Diese tafelartigen Stützen 17, 18 erweisen sich im Hinblick auf die Fahrzeugfrontarmierung und Crashsicherheit als besonders vorteilhaft, weil sie wegen ihrer langen untenseitigen Abstützbasis und auch vergleichsweise langen oberen Abstützfläche für eine sehr stabile Einbaulage des Armaturenbrettes 13 sorgen und wesentlich dazu beitragen, daß im Falle eines Frontalcrashes das Armaturenbrett 13 nicht oder nicht nennenswert in den Fahrzeug- bzw. Fahrerhausinnenraum verschoben wird. Wie Fig. 7 und 8 zeigen, können die Stützen 17, 18 aber auch durch einfache Rohre mit untenendigen Anschlußflanschen für boden- bzw. tunnelseitige Abstützung und Befestigung mittels Schrauben gebildet sein.

In jedem Fall trägt die erfindungsgemäße Armaturenbrettkonfiguration zu einer sehr wesentlichen Erhöhung der Sicherheit für Fahrer und Beifahrer bei.

## Patentansprüche

1. Armaturenbrett (13) in einem Frontlenker-Lastkraftwagen oder -Omnibus, das mit seinen Teilen (13/1, 13/2, 13/3) komplett auf einem Träger (14) montierbar ist, der
- in Einbaulage auch ein in Quer- und Fahrtrichtung wirksames Frontwandarmierungsorgan bildet,
- sich im Bereich der Frontwand-Brüstungslinie (7) unterhalb der Windschutzscheibe (8) zwischen den beiden A-Säulen (9, 10) der Frontwand (4) erstreckt,
- mit den A-Säulen (9, 10) und der Frontwand (4) verbunden ist, und
- von unten her über Stützen (17, 18) gegenüber dem Boden (5; 6) abgestützt ist,
dadurch gekennzeichnet, daß der Träger (14) in sich nach Art eines Leiter-oder Fachwerkrahmens ausgebildet ist und aus einem formstabilen, die A-Säulen (9, 10) verbindenden hinteren Querträger (14/1) und einem an der Frontwand (4) innenseitig fixierten vorderen Querträger (14/2) sowie mehreren, die beiden Querträger (14/1,14/2) verbindenden Streben (14/3) besteht, welch letztere hinsichtlich Formgebung, Material, Querschnitt und Anordnung so festgelegt sind, daß innerhalb des Trägers (14) eine bei einem Frontal-Crash des Fahrzeuges definiert wirksame Verformungs- bzw. Knautschzone gegeben ist.

2. Armaturenbrett nach Anspruch 1, dadurch gekennzeichnet, daß sich alle Teile (14/1, 14/2, 14/3) des Trägers (14) in einer parallel zur Fahrbahn verlaufenden Ebene erstrecken.

3. Armaturenbrett nach einem der vorhergehenden Ansprüche, dadurch gekennzeichnet, daß der Träger (14) hinsichtlich Ausbildung und Anordnung seiner Teile (14/1, 14/2, 14/3) vorzugsweise zur Längsmittelhochebene des Fahrzeuges symmetrisch ausgebildet ist.

4. Armaturenbrett nach einem der vorhergehenden Ansprüche, dadurch gekennzeichnet, daß sich innerhalb des den Träger (14) bildenden Leiter- bzw. Fachwerkrahmens der vordere Querträger (14/2) nicht ganz bis zu den A-Säulen (9, 10) hin, sondern sich nur über etwa 60 bis 80% der Frontwandbreite erstreckt und dabei der Abstand vom jeweiligen Ende zur benachbarten A-Säule jeweils vorzugsweise gleich ist.

5. Armaturenbrett nach einem der vorhergehenden Ansprüche, dadurch gekennzeichnet, daß der innerhalb des den Träger (14) bildenden Leiter- bzw. Fachwerkrahmens gegebene vordere Querträger (14/2) der Kontur eines die Frontwand (4) im Bereich der Brüstungslinie (7) unterhalb der Windschutzscheibe (8) armierenden Hohlprofiles (11; 11/2, 11/3) folgt und an diesem formschlüssig, insbesondere mit ihm verzahnt, fixierbar sowie mittels Verschraubungen befestigbar ist.

6. Armaturenbrett nach einem der Ansprüche 1 bis 3, dadurch gekennzeichnet, daß der innerhalb des den Träger (14) bildenden Leiter- bzw. Fachwerkrahmens gegebene hintere Querträger (14/1) in der Einbauebene mehrfach abgestuft, das heißt, bezogen auf die Frontwand (4) abschnittsweise unterschiedlich weit in Richtung Fahrzeug- bzw. Fahrerhaus-Innenraum hineinragend ausgebildet und dabei der Mittelabschnitt am weitesten einwärts gezogen ist, um in diesem Bereich des Trägers (14) den mittleren Armaturenbrett-Modul (13/1) mit der Lüftungs-, Heizungs- und Klimaanlage unterzubringen.

7. Armaturenbrett nach einem der Ansprüche 1 bis 3 und 6, dadurch gekennzeichnet, daß der innerhalb des den Träger (14) bildenden Leiter- bzw. Fachwerkrahmens gegebene hintere Querträger (14/1) an seinen äußeren Enden Anschlußorgane wie Flansche oder Platten aufweist, über die er an den A-Säulen (9, 10) mittels Schrauben (15) lösbar befestigbar ist.

8. Armaturenbrett nach einem der Ansprüche 1 bis 3, 6 und 7, dadurch gekennzeichnet, daß der innerhalb des den Träger (14) bildenden Leiter- bzw. Fachwerkrahmens gegebene hintere Querträger (14/1) entweder als Hohlprofil realisiert und dabei aus zwei einander ergänzenden und miteinander verschraubten oder verschweißten Blechpreßteilen (14/11, 14/12) zusammengesetzt oder durch ein Rohr mit vorzugsweise rechteckigem oder quadratischem Querschnitt realisiert ist.

9. Armaturenbrett nach einem der vorhergehenden Ansprüche, dadurch gekennzeichnet, daß die innerhalb des den Träger (14) bildenden Leiter- bzw. Fachwerkrahmens den vorderen und hinteren Querträger (14/2, 14/1) verbindenden sprossenartigen Streben (14/3) entweder als gerade stabförmige Organe oder als gekrümmte Organe ausgebildet sind und sich entweder parallel oder schräg zur Fahrzeuglängsachse erstrecken, wobei die Streben (14/3) entweder von Profilhalbzeugen oder Halbzeug-Rohren abgelängt oder durch Blechpreßteile mit gleichbleibendem oder sich über die Länge änderndem Querschnitt gebildet werden können.

10. Armaturenbrett nach einem der vorhergehenden Ansprüche, dadurch gekennzeichnet, daß die innerhalb des den Träger (14) bildenden Leiter- bzw. Fachwerkrahmens den vorderen und hinteren Querträger (14/2, 14/1) verbindenden Streben (14/3) vorne selbst so ausgebildet oder mit einem festen Anschlußorgan (14/31) versehen sind, daß die Strebe (14/3) vorn formschlüssig am vorderen Querträger (14/2) fixierbar und befestigbar - anschweißbar oder anschraubbar - ist.

11. Armaturenbrett nach einem der Ansprüche 1 bis 9, dadurch gekennzeichnet, daß die innerhalb des den Träger (14) bildenden Leiter- bzw. Fachwerkrahmens den vorderen und hinteren Querträger (14/2, 14/1) verbindenden Streben (14/3) hinten selbst so ausgebildet oder mit einem Anschlußorgan (14/32) versehen sind, daß die Strebe (14/3) hinten formschlüssig am hinteren Querträger (14/1) fixierbar und befestigbar - anschweißbar oder anschraubbar - ist.

12. Armaturenbrett nach einem der Ansprüche 9 bis 11, dadurch gekennzeichnet, daß die innerhalb des Trägers (14) gegebenen Streben (14/3) generell hinsichtlich Material, Bemessung, Wandstärke bzw. Blechdicke und Formgebung so festgelegt sind, daß sie - innerhalb des Trägers (14) dessen Knautschzone bildend - die bei einem Frontalcrash des Fahrzeuges auftretenden Kräfte energieverzehrend in Verformungsarbeit umsetzen können.

13. Armaturenbrett nach einem oder mehreren der vorhergehenden Ansprüche, dadurch gekennzeichnet, daß es in Einbaulage durch zwei Stützen (17, 18) gegenüber Fahrzeug- bzw. Fahrerhausboden (5) respektive Motortunnel (6) abgestützt ist, welche Stützen (17, 18) entweder
- unabhängig vom Armaturenbrett (13) als Bestandteil des Fahrzeuges vorgesehen in diesem installiert sind und mit denen dann das Armaturenbrett (13) bei dessen Einbau ins Fahrzeug oben abgestützt über den integrierten Träger (14) verbindbar ist, oder
- als Bestandteil des Armaturenbrettes (13) schon angebaut, dabei an dessen Träger (14) unten abragend angeschlossen sind und bei Einbau des Armaturenbrettes ins Fahrzeug dort bodenseitig abstützbar und befestigbar sind.

14. Armaturenbrett nach Anspruch 13, dadurch gekennzeichnet, daß die Stützen (17, 18) entweder als Stützwangen durch tafelartige, gegebenenfalls durch Polsterungen oder Blenden verkleidete Blechpreßteile oder durch einfache Rohre mit Anschlußflanschen ausgebildet sind.

## Claims

1. Instrument panel (13) in a forward-control truck or bus, which instrument panel (13) can with its parts (13/1,13/2,13/3) be mounted complete on a carrier (14) which
• in installation position is also a front-wall-reinforcing organ acting in transverse and driving directions,
• extends in the area of the front-wall chord line (7) below the windscreen (8) between the two A posts (9, 10) of the front wall (4),
• is connected with the A posts (9, 10) and the front wall (4) and
• is, in relation to the floor (5; 6), supported from below by means of supports (17, 18),
characterised in that carrier (14) is designed as a ladder or latticework frame and consists of a dimensionally stable rear cross member (14/1) connecting the A posts (9, 10) and of a front cross member (14/2) internally fixed to the front wall (4) as well as of several struts (14/3) connecting the two cross members (14/1, 14/2) and designed with regard to their form, material, cross-section and arrangement so that in the event of the vehicle's suffering a frontal crash a definedly effective deformation zone is provided within the carrier (14).

2. Instrument panel according to Claim 1, characterised in that all parts (14/1, 14/2, 14/3) of the carrier (14) are arranged in a plane parallel to the road surface.

3. Instrument panel according to one of the foregoing Claims, characterised in that the carrier (14) is, with regard to the design and arrangement of its parts (14/1,14/2, 14/3), symmetrically designed preferably about the central longitudinal vertical plane of the vehicle.

4. Instrument panel according to one of the foregoing Claims, characterised in that within the ladder or latticework frame constituting the carrier (14) the front cross member (14/2) extends not fully up to the A posts (9, 10) but only over about 60 to 80 % of the front wall width, the distance from each end to the neighbouring A post being preferably identical.

5. Instrument panel according to one of the foregoing Claims, characterised in that the front cross member (14/2) provided within the ladder or latticework frame constituting the carrier (14) follows the contour of a hollow section (11; 11/2, 11/3) reinforcing the front wall (4) in the area of the chord line (7) below the windscreen (8) and can be positively fixed to and especially be interlocked with said hollow section (11; 11/2, 11/3) and be attached to it by means of screwed connections.

6. Instrument panel according to one of the Claims 1 to 3, characterised in that the rear cross member (14/1) provided within the ladder and latticework frame constituting the carrier (14) has, in the installation plane, several steps, ie it is, in relation to the front wall (4), designed so that from section to section it projects to varying degrees in the direction of the vehicle/cab interior, the central section extending farthest inwards so as to accommodate in this area of the carrier (14) the centre instrument panel module (13/1) with the ventilation, heating and air-conditioning systems.

7. Instrument panel according to one of the Claims 1 to 3 and 6, characterised in that the rear cross member (14/1) provided within the ladder and latticework frame constituting the carrier (14) is, at its outer ends, equipped with connecting organs such as flanges or plates, via which it can be detachably fitted to the A posts (9, 10) by means of bolts (15).

8. Instrument panel according to one of the Claims 1 to 3, 6 and 7, characterised in that the rear cross member (14/1) provided within the ladder and latticework frame constituting the carrier (14) is designed either as a hollow section composed of two complementary sheet metal pressings (14/11, 14/12) bolted or welded to each other or as a tube of preferably rectangular or square cross-section.

9. Instrument panel according to one of the foregoing Claims, characterised in that the rung-type struts (14/3) connecting the front and rear cross members (14/2, 14/1) within the ladder and latticework frame constituting the carrier (14) are designed either as straight rod-shaped organs or as curved organs and extend either parallel or obliquely to the vehicle's longitudinal axis, the struts (14/3) being cut from either sectional semi-finished products or semi-finished tubes or can be formed from sheet metal pressings with a cross-section which either is constant or changes over their length.

10. Instrument panel according to one of the foregoing Claims, characterised in that the struts (14/3) connecting the front and rear cross members (14/2, 14/1) within the ladder and latticework frame constituting the carrier (14) are themselves so designed at the front or provided there with a fixed connecting organ (14/31) that the strut (14/3) can at the front be positively fixed and attached to the front cross member (14/2) by means of a welded or bolted connection.

11. Instrument panel according to one of the Claims 1 to 9, characterised in that the struts (14/3) connecting the front and rear cross members (14/2, 14/1) within the ladder and latticework frame constituting the carrier (14) are themselves so designed at the rear or provided there with a fixed connecting organ (14/32) that the strut (14/3) can at the rear be positively fixed and attached to the rear cross member (14/1) by means of a welded or bolted connection.

12. Instrument panel according to one of the Claims 9 to 11, characterised in that the struts (14/3) provided within the carrier (14) are, in respect of material, dimensions, wall thickness, metal sheet thickness and shape, so designed that they, constituting a deformation zone within the carrier (14), can in an energy-consuming manner convert into deformation work the forces occurring in a frontal crash of the vehicle.

13. Instrument panel according to one or several of the foregoing Claims, characterised in that in installation position it is, in relation to the vehicle/cab floor (5) and the engine tunnel (6), supported by two supports (17, 18) which either
• are, independently of the instrument panel (13), provided as part of the vehicle and installed in this and with which the instrument panel (13) can, upon installation in the vehicle, be supported at the top and be connected via the integrated carrier (14), or
• are already attached as part of the instrument panel (13) and connected, at the bottom and in a projecting manner, to its carrier (14) and can, upon installation of the instrument panel in the vehicle, be supported on and attached to the floor.

14. Instrument panel according to Claim 13, characterised in that the supports (17, 18) are designed either as board-like sheet metal pressings formed as supporting webs and if necessary clad by means of upholstery or panels or as simple tubes with connecting flanges.

## Revendications

1. Un tableau de bord (13) dans un camion ou un omnibus à conducteur à l'avant, pouvant être monté complètement avec ses éléments (13/1, 13/2, 13/3) sur un support (14) qui, en position de montage, constitue également un organe d'armature de paroi avant agissant dans la direction transversale et la direction de roulage,
• dans la zone de la ligne d'appui de paroi avant (7), s'étend au-dessous du pare-brise (8) entre les deux colonnes A (9, 10) de la paroi avant (4),
• est relié aux colonnes A (9, 10) et à la paroi avant (4),
• est soutenu par le dessous, par l'intermédiaire d'appuis (17, 18) , vis-à-vis du fond (5; 6),
caractérisé en ce que
le support (14) est constitué à la façon d'un châssis d'échelle ou de treillis et d'une traverse (14/1) arrière à forme stable, reliant les colonnes A (9, 10) et d'une traverse avant (14/2) fixée du coté intérieur sur la paroi avant (4), ainsi que de plusieurs entretoises (14/3) reliant les deux traverses (14/1, 14/2), ces dernières étant conçues, du point de vue de la configuration du matériau de la section transversale et de l'agencement, de manière à constituer à l'intérieur du support (14) une zone de déformation respectivement déformable par froissement, agissant de façon définie en cas de choc frontal du véhicule.

2. Tableau de bord selon la revendication 1,
caractérisé en ce que
tous les éléments (14/1, 14/2, 14/3) du support (14) s'étendent dans un plan s'étendant parallèlement à la trajectoire de roulage.

3. Tableau de bord selon l'une des revendications précédentes,
caractérisé en ce que
le support (13) est réalisé, du point de vue de la configuration et de l'agencement du point de vue de la configuration et de l'agencement de ses éléments (14//1, 14/2, 14/3), de préférence symétriquement par rapport au plan vertical médian longitudinal du véhicule.

4. Tableau de bord selon l'une des revendications précédentes,
caractérisé en ce que
à l'intérieur du châssis en échelle, respectivement en treillis constituant le support (14), la traverse avant (14/2) ne s'étend pas complètement jusqu'aux colonnes A (9, 10), mais seulement sur environ 60 à 80 % de la largeur de la paroi avant, et l'espacement entre l'extrémité respective et la colonne A voisine étant chaque fois de préférence identique.

5. Tableau de bord selon l'une des revendications précédentes,
caractérisé en ce que
la traverse avant (14/2), constituée à l'intérieur du châssis en échelle, respectivement en treillis constituant le support (14), suit le contour d'un profilé creux (11; 11/2, 11/3) servant à armer la paroi avant (4) dans la zone d'appui (7) au-dessous du pare-brise (8), et est susceptible être fixée à celui-ci par une liaison par ajustement de forme, en particulier en étant liée avec lui ainsi et susceptible d'être fixée au moyen de vissages.

6. Tableau de bord selon l'une des revendications 1 à 3,
caractérisé en ce que
la traverse arrière (14/1), constituée à l'intérieur du châssis en échelle, respectivement en treillis constituant le support (14), est étagée à plusieurs reprises dans le plan d'un montage, c'est-à-dire est réalisée, par rapport à la paroi avant (4), en pénétrant par tronçons de longueurs différentes dans la direction de l'espace intérieur du véhicule, respectivement de la cabine de conduite, et le tronçon médian étant réalisé pour pénétrer le plus loin à l'intérieur, afin de loger dans cette zone du support (14) le module de tableau de bord médian (13/1), équipé de l'installation de ventilation chauffage et climatisation.

7. Tableau de bord selon l'une des revendications 1 à 3 et 6,
caractérisé en ce que
la traverse arrière (14/1), constituée à l'intérieur du châssis en échelle, respectivement en treillis constituant le support (14) présente,' sur ses extrémités extérieures, des organes de raccordement, tels que des brides ou des plaques, par l'intermédiaire desquelles elle peut être fixée de façon désolidarisable au moyen de vis (15) sur les colonnes A (9,10).

8. Tableau de bord selon l'une des revendications 1 à 3, 6 et 7,
caractérisé en ce que
la traverse arrière (14/1), constituée à l'intérieur du châssis en échelle, respectivement en treillis constituant le support (14), soit est réalisée sous forme de profilé creux et est alors constituée de deux pièces façonnées en tôle (14/11, 14/12), se complétant l'une l'autre et vissées ou soudées ensemble, soit est réalisée au moyen d'un tube ayant une section transversale de préférence rectangulaire ou carré.

9. Tableau de bord selon l'une des revendications précédentes,
caractérisé en ce que
les entretoises (14/3) du genre de barreau, reliant les traverses avant et arrière (14/2, 14/1) à l'intérieur du châssis en échelle, respectivement en treillis constituant le support (14), sont réalisées, soit sous forme d'organes rectilignes en forme de barre, soit d'organes incurvés, et s'étendent soit parallèlement soit obliquement par rapport à l'axe longitudinal du véhicule, les entretoises (14/3) étant coupées à longueur, soit à partir de produits semi-finis profilés ou de produit semi-finis en tubes, soit pouvant être constituées par des pièces en tôle façonnées ayant une section transversale constante ou bien allant en variant sur la longueur.

10. Tableau de bord selon l'une des revendications précédentes,
caractérisé en ce que
les entretoises (14/3) reliant les traverses avant et arrière (14/2, 14/1) à l'intérieur du châssis en échelle, respectivement en treillis constituant le support (14) sont réalisées à l'avant, elles-mêmes, en organe de raccordement, ou bien sont dotées d'un organe de raccordement (14/31) placé à demeure, de manière que les entretoises (14/3) peuvent être fixées en position à l'avant par une liaison avec ajustement de forme sur la traverse avant (14/2) et peuvent être fixées mécaniquement - par soudage ou vissage.

11. Tableau de bord selon l'une des revendications 1 à 9,
caractérisé en ce que
les entretoises (14/3) reliant les traverses avant et arrière (14/2, 14/1) à l'intérieur du châssis en échelle, respectivement en treillis constituant le support (14) sont réalisées à l'arrière, elles-mêmes, en organe de raccordement, ou bien sont dotées d'un organe de raccordement (14/32) de manière que les entretoises (14/3) peuvent être fixées en position avec une liaison par ajustement de forme sur la traverse arrière (14/1) et peuvent être fixées mécaniquement - par soudage ou par vissage.

12. Tableau de bord selon l'une des revendications 9 à 11,
caractérisé en ce que
les entretoises (14/3) prévues à l'intérieur du support (14) sont conçues de façon globale, concernant le matériau, les dimensions, l'épaisseur de paroi respectivement l'épaisseur de tôle et la configuration, de manière qu'elles puissent - en constituant à l'intérieur du support (14) sa zone déformable - convertir les forces se produisant en cas de choc frontal du véhicule en un travail de déformation accompagné d'une consommation de l'énergie.

13. Tableau de bord selon l'une ou plusieurs des revendications précédentes,
caractérisé en ce qu'
il est soutenu en position de montage par deux appuis (17, 18), par rapport au fond de véhicule, respectivement de cabine de conduite (5), respectivement au tunnel moteur (6), ces appuis (17, 18) soit
• étant prévus indépendamment du tableau de bord (13) à titre de composant du véhicule, installés dans celui-ci et le tableau de bord (13) pouvant alors être relié à ceux-ci lors de son montage dans le véhicule, en étant soutenu en partie haute par l'intermédiaire du support (14) intégré,
• déjà montés, à titre de composants du tableau de bord (13), étant alors raccordés, en porte-à-faux vers le bas, sur son support (14) et, lors du montage du tableau de bord dans le véhicule, pouvant être soutenus et être fixés à cet endroit, coté fond.

14. Tableau de bord selon la revendication 13,
caractérisé en ce que
les appuis (17, 18) sont soit
• réalisés sous forme de joues d'appui, au moyen de pièces façonnées en tôle du genre panneaux, le cas échéant habillées par des rembourrages ou des écrans,
• ou réalisés au moyen de tubes simples ayant des brides de raccordement.
